# FASCICULE DE BREVET EUROPEEN

(11) **EP 3 478 386 B1**
(45) Date de publication et mention de la délivrance du brevet: **22.07.2020**
(21) Numéro de dépôt: 17743079.0
(22) Date de dépôt: 21.06.2017
(51) Int. Cl.: A63H 30/02, B64F 3/02, B64C 39/02, A63H 27/04, A63H 27/133

(54) **DISPOSITIF D'ALIMENTATION POUR DRONE FILAIRE**
VORRICHTUNG ZUR STROMVERSORGUNG AN EINE VERDRAHTETE DROHNE
DEVICE FOR SUPPLYING POWER TO A WIRED DRONE

(30) Priorité: 01.07.2016 FR 1670361
(43) Date de publication de la demande: 08.05.2019
(73) Titulaire: ELISTAIR, 69410 Champagne au Mont d'Or (FR)
(72) Inventeur: CALVEZ, Cyril, Frank, 69480 Morancé (FR); PENET, Timothée, Hervé, Marc, Marie, 69005 Lyon (FR); DE MARLIAVE, Guilhem, Marie, Christian, 69002 Lyon (FR); DUBOIS, Olivier, Bernard, François, 69005 Lyon (FR)
(74) Mandataire: Verriest, Philippe
(86) Numéro de dépôt international: PCT/IB2017/053683
(87) Numéro de publication internationale: WO 2018/002775

(56) Documents cités:
- WO-A1-2013/013219
- WO-A1-2016/059953
- US-A1- 2010 295 303
- US-B1- 6 325 330

## Description

### DOMAINE TECHNIQUE DE L'INVENTION

L'invention concerne un dispositif d'alimentation permettant de maximiser la puissance électrique transmise par un système filaire d'alimentation pour drones à voilures tournantes, le drone étant relié au sol par un fil. Un drone désigne un engin volant piloté à distance au moyen d'un dispositif de contrôle. Les drones dits à voilure tournante comprennent toutes les formes de modèles réduits d'hélicoptères connues. Le fil concerné par l'invention a au moins pour fonction l'alimentation électrique du drone. Le fil comporte ainsi au moins deux brins d'alimentation électrique. Le fil a souvent d'autres fonctions. Par exemple, une autre fonction du fil peut être le transfert de données, via par exemple une fibre optique ou la technique dite des Courants Porteurs en Ligne. Le fil doit avoir des caractéristiques mécaniques convenables : il comporte souvent un brin en aramide qui assure une grande résistance à la traction. Le fil peut comporter tout autre brin, de manière à transférer quelque chose entre le sol et le drone. Tous ces brins sont en général réunis dans une gaine, la gaine constituant la partie apparente du fil.

Au niveau mécanique, un système filaire pour drone comporte souvent une base au sol, un fil, et un dispositif d'accroche du fil au drone. La base au sol comporte en général un tambour d'enroulement du fil, un moteur permettant la rotation du tambour. Le système filaire peut aussi être réduit à sa plus simple expression, c'est à dire un fil connecté d'un côté au drone et de l'autre côté au sol.

Un dispositif d'alimentation d'un système filaire comprend en général :
- un dispositif de branchement à une source externe d'énergie électrique, par exemple une batterie au sol, ou le réseau électrique,
- un convertisseur de puissance qui convertit le couple intensité-tension de la source externe à un couple intensité-tension qui circule dans le fil,
- un fil comme décrit précédemment,
- un convertisseur de puissance sur le drone qui permet de convertir le couple intensité-tension circulant dans le fil au couple intensité-tension utilisable par le drone. Ce convertisseur de puissance est choisi de manière à être le plus léger possible, pour augmenter la charge utile du drone.

### TECHNIQUE ANTÉRIEURE

Pour augmenter la portée des drones filaires et leur charge utile, on utilise en général des brins d'alimentation les plus légers possibles, donc les plus fins possibles. La contrepartie de la finesse des brins est l'échauffement du fil lorsque l'intensité qui parcourt les brins est élevée. Cet échauffement peut conduire à une détérioration du fil à intensité trop élevée. Dans le cas où le fil est enroulé sur un tambour, la détérioration a lieu en général au niveau où le fil est enroulé, surtout s'il est enroulé sur plusieurs épaisseurs. La partie du fil qui est déroulée est rarement endommagée, car refroidie par l'air ambiant. Généralement, une base au sol munie d'un tambour d'enroulement du fil est munie d'un ventilateur pour refroidir le fil enroulé sur le tambour.

Pour augmenter la puissance délivrée au drone, on s'arrange pour choisir un couple intensité-tension parcourant le fil tel que l'intensité est faible, et la tension élevée. Ainsi le convertisseur de puissance situé au sol augmente en général la tension, tandis que le convertisseur situé sur le drone abaisse la tension.

En général, le convertisseur de puissance de la base au sol délivre au fil une tension fixe. La tension à l'entrée du convertisseur de puissance du drone baisse d'autant plus que l'intensité parcourant les fils est élevée, du fait de la loi d'Ohm et de la résistance des brins électriques du fil. Les inconvénients de cette tension fixe à la sortie du convertisseur de puissance de la base au sol sont doubles :
1. A puissance élevée, le convertisseur de puissance du drone est alimenté avec une tension moins élevée qu'à faible puissance : le convertisseur de puissance placé sur le drone ne fonctionne pas à son point de rendement optimal sur toute la gamme de puissance,
2. A puissance élevée, la baisse de tension à l'entrée du convertisseur de puissance du drone peut éventuellement entraîner l'arrêt du fonctionnement du drone car la tension passe en deçà du seuil de fonctionnement du drone ou du convertisseur de puissance du drone.

Le document US6325330B1 décrit un dispositif d'alimentation en puissance d'un drone filaire selon le préambule de la revendication 1.

### EXPOSÉ DE L'INVENTION

Le dispositif d'alimentation selon l'invention vient remédier à ces inconvénients et augmente la puissance maximum d'utilisation du drone.

Selon une première caractéristique, le dispositif d'alimentation comporte au moins un convertisseur de puissance au sol et un convertisseur de puissance sur le drone.

Selon une deuxième caractéristique, une régulation du convertisseur de puissance au sol assure que la tension *U_{B}* délivrée par le convertisseur de puissance au sol augmente lorsque l'intensité *I_{B}* délivrée par le convertisseur de puissance au sol augmente, et ce sur la gamme de puissance d'utilisation normale du drone.

### NOTATIONS UTILES POUR COMPRENDRE LES VARIATIONS DE L'INVENTION ET UTILISÉES DANS TOUT LE DOCUMENT

*U_{B}* désigne la tension à la sortie du convertisseur de puissance au sol.

*I_{B}* désigne l'intensité à la sortie du convertisseur du puissance au sol. *I_{B}* circule donc dans les brins d'alimentation du fil, et est l'intensité d'alimentation du convertisseur de puissance sur le drone.

*R_{F}* désigne la résistance du fil, c'est à dire la résistance des deux brins d'alimentation du fil.

*T_{F}* désigne la température du fil, *T_{A}* désigne la température ambiante.

*U_{D}* désigne la tension à l'entrée du convertisseur de puissance du drone.

*P_{M}* désigne la puissance effective disponible pour les moteurs du drone.

### VARIATIONS DE L'INVENTION

Selon des variations de l'invention,
- la régulation compense la chute de tension entre la sortie du convertisseur de puissance au sol et l'entrée du convertisseur de puissance du drone, due à la résistance *R_{F}* du fil,
- la régulation assure une tension *U_{D}* en entrée du convertisseur de puissance sur le drone constante, proche de la tension optimale de fonctionnement du convertisseur de puissance sur le drone,
- la tension *U_{B}* délivrée par le convertisseur de puissance au sol augmente linéairement avec l'intensité, suivant une loi affine de type *U_{B}* = *U*₀ + *R_{B}I_{B}* où *U*₀ désigne une tension constante, proche de la tension optimale d'alimentation du convertisseur de puissance du drone, et *R_{B}* désigne une constante approximativement égale à la résistance *R_{F}* du fil,
- la constante *U*₀ précédente est remplacée par une fonction *U*₀(*I_{B}*)*,* telle que cette fonction soit proche de la fonction qui décrit la tension optimale d'alimentation du convertisseur de puissance du drone en fonction de l'intensité d'alimentation,
- il est tenu compte de la variation de la résistance *R_{F}* des brins d'alimentation du fil avec la température, par exemple grâce à une mesure de la température du fil en un ou plusieurs endroits, ou la mesure de la température ambiante, ou les deux,
- la résistance *R_{F}* du fil est réévaluée régulièrement à l'aide des mesures de *U_{B}, U_{D}, I_{B}* et de la loi d'Ohm,
- la régulation repose sur un asservissement de la classe des asservissements du premier ordre ou permettant de ne pas obtenir d'oscillations trop importantes de la tension, même suite à une brusque variation de la puissance consommée par le drone,
- un circuit sur le drone, intercalé entre le fil et le convertisseur de puissance du drone, comporte au moins un élément de type capacitif et absorbe les variations de tension lors d'une variation brutale de la puissance consommée par le drone,
- le convertisseur de puissance au niveau du drone est à ratio fixe,
- *U_{B}* est asservi directement à la mesure de *U_{D},* la valeur de *U_{D}* étant transmise via le fil.
- la régulation maximise le rapport *P_{M}*/*T_{F}* ou, ce qui est équivalent, le rapport *P_{M}*/*I_{B}, P_{M}* désignant la puissance disponible pour les moteurs du drone, *T_{F}* la température du fil, et *I_{B}* l'intensité circulant dans le fil.

### DESCRIPTION SOMMAIRE DES FIGURES

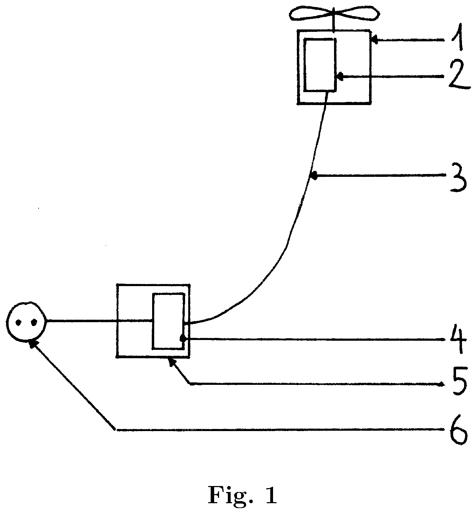

La figure 1 représente un drone (1) muni d'un convertisseur de puissance (2) relié par un fil (3) à une base au sol (5) munie d'un convertisseur de puissance (4) relié au secteur (6).

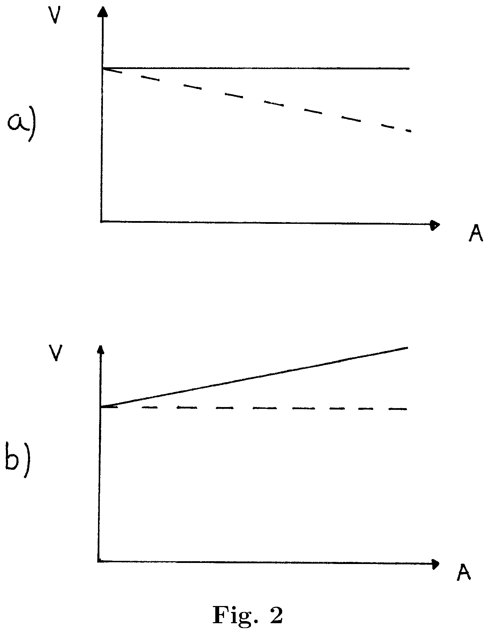

La figure 2 permet de comparer les tensions *U_{B}* et *U_{D}* en fonction de l'intensité *I_{B}* pour un dispositif d'alimentation classique (figure 2a) et un dispositif d'alimentation selon un mode particulier de réalisation de l'invention (figure 2b). En trait plein, on a représenté la tension *U_{B}* en Volt en fonction de l'intensité *I_{B}* en Ampère, en trait pointillé la tension *U_{D}* en Volt en fonction de l'intensité *I_{B}* en Ampère. On voit que la tension *U_{D}* disponible pour le drone (1) chute avec la puissance demandée pour un dispositif d'alimentation classique, tandis que la tension *U_{D}* disponible pour le drone (1) reste constante quelle que soit la puissance demandée pour le dispositif d'alimentation selon un mode particulier de réalisation de l'invention.
La figure 3 illustre la réaction de différents dispositifs d'alimentation selon l'invention lorsque la puissance du drone (1) augmente brutalement.
La figure 3a représente l'intensité *I_{B}* en Ampère en fonction du temps en secondes. Cette intensité double brutalement à un instant que nous nommons t.
Les figures 3b, 3c, 3d représentent les réactions en fonction du temps de trois dispositifs d'alimentation différents selon le principe illustré à la figure 2b. Pour ces trois figures, on retrouve en trait plein la tension *U_{B}* en fonction du temps en secondes et en trait pointillé la tension *U_{D}* en fonction du temps en secondes.

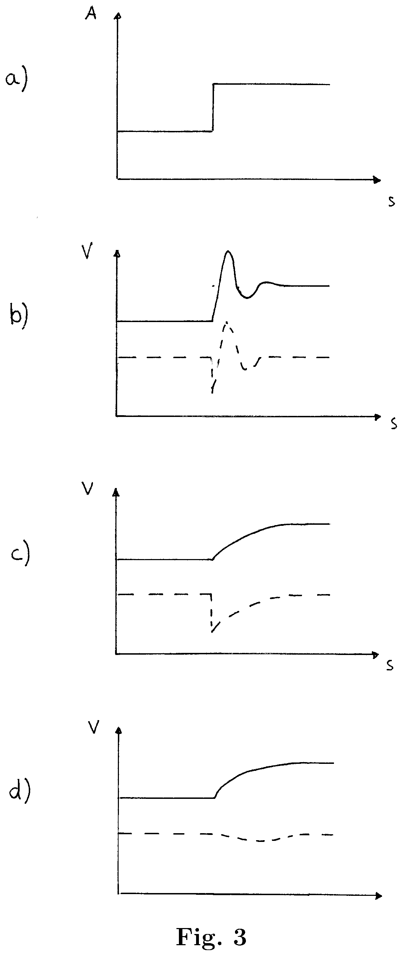

La figure 3b correspond à un dispositif dont l'asservissement correspond à un système du second ordre. On voit que la tension *U_{D}* varie fortement juste après l'instant *t,* ce qui risque d'aboutir à un fort dysfonctionnement, soit par surtension, soit par sous-tension.
La figure 3c correspond à un dispositif dont l'asservissement correspond à un système du premier ordre. On voit que la tension *U_{D}* varie aussi fortement juste après l'instant t mais il n'y a pas d'oscillation. Le seul dysfonctionnement possible est par sous-tension.
La figure 3d correspond au même dispositif qu'à la figure 3c mais on a rajouté immédiatement en amont du convertisseur de puissance (2) du drone (1) une petite capacité pour faire face aux variations de tension et lisser *U_{D}.*

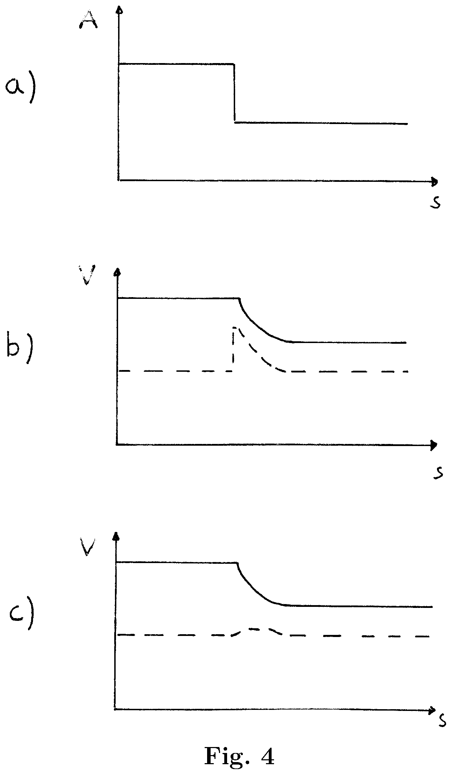

La figure 4 illustre la réaction de différents dispositifs selon l'invention lorsque la puissance du drone (1) diminue brutalement.
La figure 4a représente l'intensité *I_{B}* en Ampère en fonction du temps en secondes. Cette intensité est brutalement divisée par 2 à un instant que nous nommons t.
Les figures 4b et 4c représentent les réactions en fonction du temps de deux dispositifs d'alimentation différents selon le principe illustré en figure 2b. Pour ces deux figures, on retrouve en trait plein la tension *U_{B}* en fonction du temps en secondes et en trait pointillé la tension *U_{D}* en fonction du temps en secondes.
La figure 4b correspond au même dispositif que celui de la figure 3c, et la figure 4c correspond au même dispositif que celui de la figure 3d.
   On voit donc que le dispositif de la figure 3d ou 4c est optimal pour le fonctionnement du système.

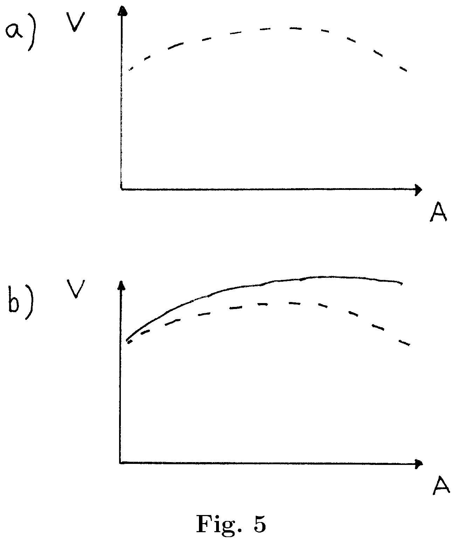

La figure 5a représente en trait pointillé la tension d'alimentation *U_{D}* qui assure un rendement maximal d'un convertisseur de puissance (2) situé sur le drone (1) en fonction de l'intensité *I_{B}* qui parcourt le fil (3). On voit ici que la tension *U_{D}* optimale varie considérablement avec l'intensité *I_{B}* en entrée.
La figure 5b représente en trait plein la tension *U_{B}* délivrée par un dispositif d'alimentation selon l'invention qui permet d'obtenir la tension *U_{D}* optimale pour offrir au drone (1) une puissance maximale en fonction de l'intensité *I_{B}.*

### MEILLEURE MANIÈRE DE RÉALISER L'INVENTION

Les manières de réaliser l'invention et leurs variantes qui suivent illustrent précisément l'invention et ne sont pas limitatives des autres manières de réaliser le dispositif d'alimentation selon l'invention.

Un mode optimal de réalisation du dispositif d'alimentation selon l'invention est réalisé comme suit.

On utilise un drone (1) de puissance maximum 2600W alimenté en 25V continu. Ce drone (1) possède un convertisseur de puissance (2) à ratio fixe 1/16 relié à un fil. Ce fil, long de 100m, est constitué de deux brins électriques, un brin en aramide, le tout dans une gaine en plastique. La résistance des brins électriques utilisés est de 0,06 ohm par mètre. Ce fil (3) est relié à un convertisseur de puissance (4) dans une base au sol (5). Le convertisseur de la base au sol (5) est alimenté par le secteur (6) en 230V alternatif. La base au sol (5) comporte un tambour d'enroulement du fil, un moteur relié au tambour d'enroulement du fil (3) qui permet d'enrouler ou dérouler le fil (3). Un ventilateur vient refroidir le tambour d'enroulement du fil (3). Un capteur de température est présent sur le tambour d'enroulement du fil (3) pour prévenir l'utilisateur d'une surchauffe éventuelle du fil (3) enroulé.

Le drone (1) possède divers instruments embarqués et communique en temps réel avec la base au sol (5) grâce à la technique dite des Courants Porteurs en Ligne, bien connue des gens du métier. Les informations transitent donc via les brins d'alimentation électrique.

Le convertisseur de puissance (2) au niveau du drone (1) possède son point de rendement maximal à 400V environ, requiert de ne pas dépasser 410V en entrée, sinon il arrête de fonctionner, et requiert également de ne jamais être alimenté à plus de 480V sous peine de détérioration irrémédiable. Ce convertisseur de puissance (2) étant à ratio fixe 1/16, il délivre en sortie une tension de 25V pour une tension d'entrée égale à 400V.

Le convertisseur de puissance (4) au niveau de la base au sol (5) utilise la technique dite de Correction du Facteur de Puissance, bien connue des gens du métier. On modifie le contrôleur de puissance pour que la tension de sortie *U_{B}* suive la loi exprimée en Volt *U_{B}* = min(400 + *R_{B}I_{B},* 480) où *I_{B}* est l'intensité en sortie du convertisseur de puissance (4) exprimée en Ampère, et *R_{B}* une constante exprimée en Ohm, dans notre cas égale à 12, que l'on a choisie égale à *R_{F}* la résistance du fil. Pour obtenir une telle loi, la modification du contrôleur de puissance nécessite des composants électroniques simples tels que diodes, résistances, capteurs de courant en sortie du convertisseur, multiplicateurs analogiques. On porte un soin particulier à ce que les composants soient ajustés de manière à ce que la régulation, en cas de variations brusques de puissance, assure que la tension ne subisse pas d'oscillations. Ainsi, la tension au niveau du convertisseur de puissance (2) du drone (1) ne dépasse pas les 410V qui entraîneraient l'arrêt du convertisseur du drone (1) et la chute du drone (1). Le choix, la façon dont les composants sont ajustés sont connus en soi des gens du métier de l'électronique et ne requièrent pas d'explication plus poussée.

A l'entrée du convertisseur de puissance (2) du drone (1), la tension *U_{D}* est égale à *U_{B}* diminuée des pertes ohmiques dans le fil (3) soit min(400 + *R_{B}I_{B},* 480) - *R_{F}I_{B}* Volts. Ainsi, tant que *I_{B}* ne dépasse pas 80/12=6,7A, la tension *U_{D}* est quasi constante égale à 400V.

Compte-tenu de l'échauffement des fils au niveau de la base au sol (5), on estime que l'intensité circulant dans les fils ne doit pas dépasser 6,7A en régime continu. La puissance maximale disponible pour le drone (1) en régime continu est donc égale à 400^{∗}6,7=2700 W à l'entrée du convertisseur de puissance (2) du drone (1), et la puissance maximale en sortie du convertisseur de puissance (2) du drone (1) est environ égale à 2600W. Avec une alimentation classique en tension fixe en 400V au niveau de la base au sol (5), la puissance maximale disponible ne serait que de 320^{∗}6,7=2150 W à l'entrée du convertisseur de puissance (2) du drone (1), et seulement 1800W en sortie du convertisseur de puissance (2) car le rendement n'est pas optimal à 320V.

Avec notre dispositif selon l'invention, on obtient donc un gain en puissance de 45% sur la puissance maximale fournie au drone (1) en régime continu par rapport à un système classique, et surtout à échauffement des fils égal.

Dans le mode de réalisation du dispositif selon l'invention précédent, on ne prend pas en compte la variation de la résistance *R_{F}* des brins d'alimentation avec la température. Les brins d'alimentation de ce premier mode de réalisation sont en cuivre, et la résistivité du cuivre varie avec la température : la résistivité augmente d'environ 50% entre -20 degré Celsius et 70 degré Celsius. Pour prendre en compte le changement de résistance *R_{F}* du fil (3) en fonction de la température, deux variations du mode de réalisation sont possibles.

La première variation du premier mode de réalisation selon l'invention consiste à utiliser l'information du capteur de température sur le tambour d'enroulement du fil. On appelle *T_{F}* la température mesurée par ce capteur. De plus, un compte-tours sur le tambour d'enroulement du fil (3) permet de connaître la longueur *l* du fil (3) encore enroulé sur le tambour. Enfin, un capteur de température sur la base au sol (5) permet d'estimer la température *T_{A}* de l'air ambiant. On remarque alors que la résistance *R_{F}* du fil (3) est une fonction *f* de *T_{A}*, *T_{F},* et *l* : *R_{F}* = *f*(*T_{A}, T_{F}, l*), fonction que l'on a déterminée théoriquement et vérifiée expérimentalement. La loi de sortie du convertisseur de puissance (4) est alors remplacée par la loi *U_{B}* = min(*U_{B}* - *f*(*T_{A}*, *T_{F}, l*)*I_{B},* 480).

La seconde variation du mode de réalisation selon l'invention consiste à mesurer régulièrement, toutes les minutes, *U_{D}* la tension à l'entrée du convertisseur de puissance (2) située sur le drone (1), *U_{B}* la tension en sortie du convertisseur de puissance (4) de la base au sol (5), et *I_{B}* l'intensité circulant dans le fil. La mesure de *U_{D}* est envoyée à la base au sol (5) via la technique des courants porteurs en ligne. La résistance *R_{F}* des brins d'alimentations du fil (3) est alors réévaluée par la loi d'Ohm, en divisant la différence *U_{B}* - *U_{D}* par *I_{B},* et la régulation régule suivant la loi min(400 + *R_{F}I,* 400).

Une autre variation du mode de réalisation de l'invention consiste à réaliser une régulation en tension *U_{B}* de type logiciel et non électronique comme décrit précédemment.

Une troisième variation du mode de réalisation selon l'invention consiste à réguler *U_{B}* directement sur la valeur mesurée de *U_{D},* cela nécessite alors une mesure de *U_{D}* à haute fréquence, très significativement supérieure au Herz, préférentiellement de l'ordre d'une dizaine de kiloHerz.

Les manières de réaliser l'invention et leurs variantes exposées précédemment illustrent précisément l'invention et ne sont pas limitatives des autres manières de réaliser le dispositif d'alimentation selon l'invention.

### POSSIBILITÉS D'APPLICATIONS INDUSTRIELLES

Le système d'alimentation selon l'invention est susceptible d'alimenter tous les drones filaires dans la mesure où il permet d'augmenter la portée et la charge utile par rapport aux systèmes d'alimentation existants.

## Revendications

1. Dispositif d'alimentation en puissance d'un drone (1) filaire, comportant au moins :
- un convertisseur de puissance (4) au sol,
- un convertisseur de puissance (2) au niveau du drone (1),
- un fil (3) reliant les convertisseurs de puissance (4 et 2),
le dispositif étant **caractérisé en ce qu'**une régulation du convertisseur de puissance (4) au sol assure que la tension *U_{B}* délivrée par le convertisseur de puissance (4) au sol augmente lorsque l'intensité *I_{B}* délivrée par le convertisseur de puissance (4) au sol augmente, et ce sur la gamme de puissance d'utilisation normale du drone (1).

2. Dispositif selon la revendication précédente, **caractérisé en ce que** la régulation compense au moins partiellement la chute de tension entre la sortie du convertisseur de puissance (4) au sol et l'entrée du convertisseur de puissance (2) au niveau du drone (1), due à la résistance *R_{F}* du fil.

3. Dispositif selon l'une des revendications précédentes, **caractérisé en ce que** la régulation assure une tension *U_{D}* en entrée du convertisseur de puissance (2) au niveau du drone (1) proche de la tension optimale de fonctionnement du convertisseur de puissance (2) au niveau du drone (1).

4. Dispositif selon l'une des revendications précédentes, **caractérisé en ce que** la tension *U_{B}* délivrée par le convertisseur de puissance (4) au sol augmente linéairement avec l'intensité, suivant une loi affine de type *U_{B}* = *U*₀ + *R_{B}I_{B}* où *U*₀ désigne une tension constante, proche de la tension optimale d'alimentation du convertisseur de puissance (2) au niveau du drone (1), et *R_{B}* désigne une constante approximativement égale à la résistance *R_{F}* du fil.

5. Dispositif selon la revendication précédente, **caractérisé en ce que** la constante *U*₀ est remplacée par une fonction *U*₀(*I_{B}*), telle que cette fonction soit proche de la fonction qui décrit la tension optimale d'alimentation du convertisseur de puissance (2) au niveau du drone (1) en fonction de l'intensité d'alimentation.

6. Dispositif selon l'une des revendications précédentes, **caractérisé en ce qu'**il est tenu compte de la variation de la résistance *R_{F}* des brins d'alimentation du fil (3) avec la température, par exemple grâce à une mesure de la température du fil (3) en un ou plusieurs endroits, ou la mesure de la température ambiante, ou les deux.

7. Dispositif selon l'une des revendications précédentes, **caractérisé en ce que** la résistance *R_{F}* du fil (3) est réévaluée régulièrement à l'aide des mesures de *U_{B}, U_{D}, I_{B}* et de la loi d'Ohm, *U_{D}* étant la tension en entrée du convertisseur de puissance (2) au niveau du drone (1).

8. Dispositif selon l'une des revendications précédentes, **caractérisé en ce que** la régulation repose sur un asservissement de la classe des asservissements du premier ordre ou permettant de ne pas obtenir d'oscillations de la tension, même suite à une brusque variation de la puissance consommée par le drone (1).

9. Dispositif selon l'une des revendications précédentes, **caractérisé en ce qu'**un circuit sur le drone (1), intercalé entre le fil (3) et le convertisseur de puissance (2) au niveau du drone (1), comporte au moins un élément de type capacitif et absorbe les variations de tension lors d'une variation brutale de la puissance consommée par le drone (1).

10. Dispositif selon l'une des revendications précédentes, **caractérisé en ce que** le convertisseur de puissance (2) au niveau du drone (1) est à ratio fixe.

11. Dispositif selon l'une des revendications précédentes, **caractérisé en ce que** *U_{B}* est asservi directement à la mesure de la tension *U_{D}* en entrée du convertisseur de puissance (2) au niveau du drone (1), la valeur de *U_{D}* étant transmise via le fil (3).

12. Dispositif selon l'une des revendications précédentes, **caractérisé en ce que** la régulation maximise le rapport *P_{M}*/*T_{F}* ou, ce qui est équivalent, le rapport *P_{M}*/*I_{B}, P_{M}* désignant la puissance disponible pour les moteurs du drone (1), et *T_{F}* la température du fil.

## Patentansprüche

1. Vorrichtung zur Stromversorgung einer verdrahteten Drohne (1), mindestens Folgendes beinhaltend:
- einen Stromrichter (4) am Boden,
- einen Stromrichter (2) im Bereich der Drohne (1),
- einen Draht (3), der die Stromrichter (4 und 2) verbindet,
wobei die Vorrichtung **dadurch gekennzeichnet ist, dass** eine Regelung des Stromrichters (4) am Boden dafür sorgt, dass sich die Spannung *U_{B},* die von dem Stromrichter (4) am Boden abgegeben wird, erhöht, wenn sich die Stromstärke *I_{B}*, die von dem Stromrichter (4) am Boden abgegeben wird, erhöht, und dies im normalen Anwendungsstrombereich der Drohne (1).

2. Vorrichtung nach dem vorstehenden Anspruch, **dadurch gekennzeichnet, dass** die Regelung den Spannungsabfall zwischen dem Ausgang des Stromrichters (4) am Boden und dem Eingang des Stromrichters (2) im Bereich der Drohne (1) aufgrund des Widerstandes *R_{F}* des Drahtes mindestens teilweise kompensiert.

3. Vorrichtung nach einem der vorstehenden Ansprüche, **dadurch gekennzeichnet, dass** die Regelung für eine Spannung *U_{D}* am Eingang des Stromrichters (2) im Bereich der Drohne (1) nahe der optimalen Betriebsspannung des Stromrichters (2) im Bereich der Drohne (1) sorgt.

4. Vorrichtung nach einem der vorstehenden Ansprüche, **dadurch gekennzeichnet, dass** sich die Spannung *U_{B},* die von dem Stromrichter (4) am Boden abgegeben wird, linear mit der Stromstärke gemäß einem affinen Gesetz der Art *U_{B}* = *U₀* + *R_{B}I_{B}* erhöht, wobei *U₀* eine konstante Spannung nahe der optimalen Versorgungsspannung des Stromrichters (2) im Bereich der Drohne (1) bezeichnet, und *R_{B}* eine Konstante annähernd gleich dem Widerstand *R_{F}* des Drahtes bezeichnet.

5. Vorrichtung nach dem vorstehenden Anspruch, **dadurch gekennzeichnet, dass** die Konstante *U₀* durch eine Funktion *U₀*(*I_{B}*) ersetzt wird, sodass diese Funktion nahe der Funktion ist, die die optimale Versorgungsspannung des Stromrichters (2) im Bereich der Drohne (1) in Abhängigkeit von der Versorgungsstromstärke beschreibt.

6. Vorrichtung nach einem der vorstehenden Ansprüche, **dadurch gekennzeichnet, dass** die Variation des Widerstandes *R_{F}* der Versorgungslitzen des Drahtes (3) mit der Temperatur, beispielsweise dank einer Messung der Temperatur des Drahtes (3) an einer oder an mehreren Stellen, oder der Messung der Umgebungstemperatur, oder beider, berücksichtigt wird.

7. Vorrichtung nach einem der vorstehenden Ansprüche, **dadurch gekennzeichnet, dass** der Widerstand *R_{F}* des Drahtes (3) regelmäßig mithilfe der Messungen von *U_{B}, U_{D}, I_{B}* und des Ohm'schen Gesetztes erneut bewertet wird, wobei *U_{D}* die Spannung am Eingang des Stromrichters (2) im Bereich der Drohne (1) ist.

8. Vorrichtung nach einem der vorstehenden Ansprüche, **dadurch gekennzeichnet, dass** die Regelung auf einer Ansteuerung der Klasse der Ansteuerungen erster Ordnung beruht oder es ermöglicht, keine Oszillationen der Spannung, selbst nach einer abrupten Variation des von der Drohne (1) aufgenommenen Stroms zu erhalten.

9. Vorrichtung nach einem der vorstehenden Ansprüche, **dadurch gekennzeichnet, dass** eine Schaltung in der Drohne (1), die zwischen dem Draht (3) und dem Stromrichter (2) im Bereich der Drohne (1) eingesetzt ist, mindestens ein Element in der Art eines kapazitiven Elements beinhaltet und die Spannungsvariationen bei einer brutalen Variation des durch die Drohne (1) aufgenommenen Stroms absorbiert.

10. Vorrichtung nach einem der vorstehenden Ansprüche, **dadurch gekennzeichnet, dass** der Stromrichter (2) im Bereich der Drohne (1) einer mit festem Verhältnis ist.

11. Vorrichtung nach einem der vorstehenden Ansprüche, **dadurch gekennzeichnet, dass** *U_{B}* direkt bei der Messung der Spannung *U_{D}* am Eingang des Stromrichters (2) im Bereich der Drohne (1) angesteuert wird, wobei der Wert *U_{D}* über den Draht (3) übertragen wird.

12. Vorrichtung nach einem der vorstehenden Ansprüche, **dadurch gekennzeichnet, dass** die Regelung das Verhältnis *P_{M}*/*T_{F},* oder, was gleichwertig ist, das Verhältnis *P_{M}*/*I_{B}* maximiert, wobei *P_{M}* den verfügbaren Strom für die Motoren der Drohne (1), und *T_{F}* die Temperatur des Drahtes bezeichnet.

## Claims

1. A device for supplying power to a wired drone (1), including at least:
- one power converter (4) on the ground,
- one power converter (2) at the level of the drone (1),
- one wire (3) connecting the power converters (4 and 2),
the device being **characterized in that** a regulation of the power converter (4) on the ground ensures that the voltage *U_{B}* delivered by the power converter (4) on the ground increases when the current *I_{B}* delivered by the power converter (4) on the ground increases, and this over the power range of normal use of the drone (1).

2. The device according to the preceding claim, **characterized in that** the regulation at least partially compensates for the voltage drop between the output of the power converter (4) on the ground and the input of the power converter (2) at the level of the drone (1), due to the resistance *R_{F}* of the wire.

3. The device according to any of the preceding claims, **characterized in that** the regulation ensures a voltage *U_{D}* at the input of the power converter (2) at the level of the drone (1), close to the optimal operating voltage of the power converter (2) at the level of the drone (1).

4. The device according to any of the preceding claims, **characterized in that** the voltage *U_{B}* delivered by the power converter (4) on the ground increases linearly with the current, according to an affine law of the type *U_{B}* = *U₀ + R_{B}I_{B}* where *Uo* designates a constant voltage, close to the optimal power supply voltage of the power converter (2) at the level of the drone (1), and *R_{B}* designates a constant approximately equal to the resistance *R_{F}* of the wire.

5. The device according to the preceding claim, **characterized in that** the constant *U₀* is replaced by a function *U₀*(*I_{B}*), such that this function is close to the function which describes the optimal power supply voltage of the power converter (2) at the level of the drone (1) as a function of the power supply current.

6. The device according to any of the preceding claims, **characterized in that** the variation of the resistance *R_{F}* of the power supply strands of the wire (3) with the temperature is taken into account, for example by measuring the temperature of the wire (3) in one or several location(s), or measuring the ambient temperature, or both.

7. The device according to any of the preceding claims, **characterized in that** the resistance *R_{F}* of the wire (3) is reevaluated regularly using the measurements of *U_{B}, U_{D}, I_{B}* and Ohm's law, *U_{D}* being the voltage at the input of the power converter (2) at the level of the drone (1).

8. The device according to any of the preceding claims, **characterized in that** the regulation is based on a servo-control of the class of the first-order servo-controls or allowing not obtaining oscillations of the voltage, even following a sudden variation of the power consumed by the drone (1).

9. The device according to any of the preceding claims, **characterized in that** a circuit on the drone (1), interposed between the wire (3) and the power converter (2) at the level of the drone (1), includes at least one capacitive-type element and absorbs the voltage variations during a sudden variation in the power consumed by the drone (1).

10. The device according to any of the preceding claims, **characterized in that** the power converter (2) at the level of the drone (1) has a fixed ratio.

11. The device according to any of the preceding claims, **characterized in that** *U_{B}* is servo-controlled directly to the measurement of the voltage *U_{D}* at the input of the power converter (2) at the level of the drone (1), the value of *U_{D}* being transmitted via the wire (3).

12. The device according to any of the preceding claims, **characterized in that** the regulation maximizes the ratio *P_{M}*/*T_{F}* or, which is equivalent, the ratio *P_{M}*/*I_{B}, P_{M}* designating the power available for the motors of the drone (1), and *T_{F}* the temperature of the wire.
